# EUROPÄISCHE PATENTSCHRIFT

(11) **EP 2 860 020 B1**
(45) Veröffentlichungstag und Bekanntmachung des Hinweises auf die Patenterteilung: **04.10.2023**
(21) Anmeldenummer: 14003494.3
(22) Anmeldetag: 11.10.2014
(51) Int. Cl.: B29C 64/112, B33Y 10/00

(54) **VERFAHREN ZUR HERSTELLUNG EINES DREIDIMENSIONALEN GEGENSTANDS SOWIE ZUGEHÖRIGER GEGENSTAND**
METHOD OF PRODUCING A THREE-DIMENSIONAL OBJECT AND CORRESPONDING OBJECT
PROCÉDÉ ET DISPOSITIF D'UN OBJET TRIDIMENSIONNEL ET OBJET CORRESPONDANT

(30) Priorität: 11.10.2013 DE 102013220587
(43) Veröffentlichungstag der Anmeldung: 15.04.2015
(73) Patentinhaber: Arburg GmbH + Co KG, 72290 Lossburg (DE)
(72) Erfinder: Kraibühler, Herbert, 72290 Lossburg (DE); Duffner, Eberhard, 72181 Starzach (DE)
(74) Vertreter: Reinhardt, Harry

(56) Entgegenhaltungen:
- WO-A1-2005/113219
- WO-A1-2012/171644
- DE-A1-102011 109 368
- US-A1- 2010 009 133

## Beschreibung

Die Erfindung betrifft ein Verfahren zur Herstellung eines dreidimensionalen Gegenstands aus in situ verfestigten Tropfen aus mehreren Materialien sowie einen derartigen dreidimensionalen Gegenstand nach dem Oberbegriff der Ansprüche 1 und 6.

In der Kunststoffteileherstellung werden durch Spritzgießen oder Extrudieren in großen Losgrößen und Serien Teile unter Verwendung von Formwerkzeugen exakt und formgerecht hergestellt. Der Vorteil insbesondere des Kunststoffspritzgießens beruht vor allem auf der hochgenauen Herstellung von komplexen Teilgeometrien, wobei optimal die Anforderungen an eine kostengünstige und wirtschaftliche Produktion von Kunststoffteilen abgedeckt werden. Ihre wirtschaftlichen Grenzen finden diese Verfahren einerseits, wenn nur noch kleine Serien oder Einzelanfertigungen erfolgen sollen. Eine andere Grenze besteht dann, wenn nicht miteinander kompatible Materialien verarbeitet werden müssen.

Für den Bereich der Stückzahl Eins oder kleinerer Losgrößen, wie zum Beispiel bei der Herstellung von Musterteilen mit der Anforderung einer kurzzeitigen Bereitstellung sowie Eigenschaften, die denen von spritzgegossenen Teilen ähnlich sind, sind Fertigungsverfahren bekannt, die weitläufig unter dem Begriff Prototyping, Rapid Manufacturing oder Adaptive Manufacturing bekannt sind. Die Herstellung solcher Teile erfolgt werkzeuglos, das heißt ohne Formwerkzeuge, in den meisten Fällen auf der Grundlage der Erzeugung einer Werkstück-Geometrie aus 3D-Daten auf unterschiedlichste Art und Weise z.B. durch Aufschmelzen von Pulverschichten durch Wärmeeintrag, z.B. mittels Laser, generative Systeme wie Druckverfahren in unterschiedlicher verbindender Form der Pulverteile oder auch im sogenannten Schmelzstrangverfahren. Pulververfahren kommen jedoch dann an ihre Grenzen, wenn mehrere verschiedene Materialkomponenten nebeneinander verarbeitet werden sollen. Andere Verfahren wie z.B. das Fadenaustragsverfahren bekommen Probleme, wenn Geometrien Überhänge oder nicht abstützbare Hohlräume aufweisen.

Aus der dem Oberbegriff des Anspruches 1 zugrunde liegenden WO 2012/171644 A1 ist in Weiterbildung der EP 1 886 793 A1 eine Vorrichtung bekannt, bei der eine in der Spritzgießtechnik bekannte Plastifiziereinheit an einen unter Druck setzbaren Materialspeicher für die fluide Phase wenigstens eines Materials angekoppelt wird. Eine derartige Plastifiziereinheit unterscheidet sich von den sonst bei der 3D-Fertigung üblichen Vorrichtungen, wie z.B. den beim 3D-Druck üblichen Druckköpfen, dadurch, dass keine vorgefertigten Materialien zugeführt werden. In der Spritzgießtechnik bedeutet ein Plastifizieren mittels einer Plastifiziereinheit eines Spritzaggregats nämlich ein Aufbereiten, Mischen und Homogenisieren des Ausgangsmaterials. Mit anderen Worten wird also das meist rieselfähige Ausgangsmaterial in den Aggregatzustand der Schmelze aufbereitet. Genau dies erfolgt auch erfindungsgemäß, so dass standardmäßig vorhandene Materialien verwendet werden können. Zur Erzeugung eines Gegenstands auf einem Objektträger wird dieses Material über eine Austrittsöffnung in Form von Tropfen ausgetragen. Aufgrund der Adhäsionskräfte des Materials sind dafür ein hoher Druck und hohe Schmelztemperaturen für das Material erforderlich, zumal der Tropfen zur Erzielung einer entsprechenden Oberflächenqualität eine Größe von 0,001 bis 0,1 mm³, vorzugsweise bis 0,05 mm³ aufweisen soll. Bereits durch das Austragen der Tropfen werden verschiedene Teile des Gegenstands aneinander gefügt, indem die Tropfen nebeneinander ausgebracht und Tropfen für Tropfen in situ verfestigt werden. Die so erhaltenen geometrischen Verhältnisse bleiben beim Herstellungsprozess im Wesentlichen erhalten und entsprechen bereits dem Gegenstand. Aus der vom selben Anmelder stammenden WO 2013/017278 A1 ist es zudem bekannt, verschiedene Materialkomponenten bei der Herstellung eines Gegenstandes nebeneinander tropfenweise aufzubringen.

Ein Verfahren, das dem Rapid Prototyping zuzuordnen ist, ist aus der WO 2009/013751 A2 bekannt. Unter dem Oberbegriff "Solid Freeform Fabrication" werden dabei Methoden zur Herstellung unmittelbar aus Computerdaten erfasst, die z.B. ein dreidimensionales Drucken, ein Elektronenstrahlschmelzen, Stereolithographie, selektives Lasersintern, laminierte Objektherstellung und VDM umfassen. Mit diesen Verfahren können benachbarte Strukturen aus verschiedenen Materialien hergestellt werden. Das Ausbringen erfolgt allerdings nicht dadurch, dass Tropfen an Tropfen oder Tropfen an Strang aneinandergefügt werden, sondern dadurch, dass feste Materialien ausgebracht und anschließend unter zusätzlicher Energiezufuhr ausgehärtet werden.

Aus der US 2013/0073068 A1 ist ebenfalls unter dem Begriff "Solid Freeform Fabrication" die Herstellung eines Gegenstands unter Verarbeitung mehrerer Materialien mit Übergangsbereichen bekannt (Absätze 0187 bis 0191). Erzielt wird eine Materialmischung mit unterschiedlichen Materialbereichen, ohne dass aber ausdrücklich auf die Verarbeitungseigenschaften der Materialien in situ eingegangen wird. Weitere Vorrichtungen zur Verarbeitung verschiedener Materialkomponenten sind aus der WO 2007/083372 A1 oder aus "Technology Series: Polyjet 11.04.2014, http://web.archive,org/web/20130624013042/http://www.growit3d.com/growitblog/polyjet (online) bekannt.

Aus der US 2010/0009133 A1 sind ein Verfahren und ein damit hergestellter Gegenstand bekannt, das es gestattet, die Grenzen zwischen nebeneinander ausgebrachten Materialien zu gestalten. Insbesondere wird dabei ein Übergang der Materialien nach einer Verteilungskurve eingesetzt.

Ausgehend von diesem Stand der Technik liegt der vorliegenden Erfindung die Aufgabe zugrunde, ein Verfahren zur Herstellung eines dreidimensionalen Gegenstands aus in situ verfestigten Tropfen aus mehreren Materialien sowie einen dreidimensionalen Gegenstand aus mehreren Materialien mit optimalen Materialübergängen bereit zu stellen.

Diese Aufgabe wird durch ein Verfahren mit den Merkmalen des Anspruches 1 sowie durch einen Gegenstand mit den Merkmalen des Anspruches 6 gelöst.

Das Ausbringen des Materials erfolgt Tropfen für Tropfen, wobei Tropfengrößen der Materialien zueinander und/oder der Abstand der Tropfen zueinander innerhalb des jeweiligen Materials so beeinflusst werden können, dass sich ein am fertigen Produkt zumindest unter dem Mikroskop erkennbarer Materialübergang erkennen lässt, der hinsichtlich der Materialeigenschaften optimiert ist. Dabei werden im Materialwechselbereich der Abstand der Tropfen zueinander innerhalb des jeweiligen Materials und/oder Tropfengrößen der Materialien zueinander variiert und bilden das erkennbare Grenzflächen-Gefüge der Tropfen in situ. Dies geschieht dadurch, dass Eigenschaften der aneinander zu fügenden Materialien und/oder Prozessparameter des Verfahrens beim Aufbereiten und/oder Austragen und/oder beim Platzieren am Gegenstand aufeinander abgestimmt werden, wobei die Materialien (A, B) formschlüssig miteinander verbunden oder kraftschlüssig aneinandergefügt werden. Dadurch können die Materialeigenschaften je nach Material auch unterschiedlich beeinflusst werden. Unterstützt werden kann der Aufbau des Gegenstandes dadurch, dass im Großen oder im mikroskopischen Bereich Formschlusseigenschaften zwischen den Materialien erzeugt werden.

Durch die Beeinflussung der Tropfen können insbesondere schichtweise Überlappungen bzw. Verbindungen im Materialwechselbereich erzeugt werden und zusätzlich zur Adhäsion der unterschiedlichen Werkstoffe lassen sich gerade durch die Beeinflussung der Materialien gegebenenfalls in Verbindung mit einer mechanischen Überlappung Festigkeiten erreichen, welche jeweils an die Grundwerte der einzelnen Materialien heranreichen. Die Tropfengröße und die Tropfendichte, verursacht durch die Positionierung der Tropfen, beeinflussen lokal die Temperatur der aneinander zu fügenden Materialien, so dass gezielt auf temperaturabhängige Materialeigenschaften eingewirkt werden kann, die die Materialbindung bzw. das Aneinanderfügen der Materialien beeinflussen. Zu denken ist insbesondere an die Adhäsion, die Temperaturdifferenz zwischen den Materialien, eine gegebenenfalls mögliche Mischung der Materialien, den temperaturabhängigen Aggregatszustand, die Homogenisierung, das Schwindungsverhalten oder den Kraftschluss.

Sowohl die Materialeigenschaften des Materials als auch das Material selbst können von Tropfen zu Tropfen wechselnd aus- und aufgebracht werden. Am fertigen Bauteil ist dies bei entsprechender Vergrößerung des Bauteils die Tropfen für Tropfen aufgebrachte Oberfläche aus verfestigten Tropfen erkennbar. Um ein derartiges Aneinanderfügen von Materialien zu ermöglichen, die unter Umständen nicht ohne weiteres miteinander verarbeitet werden können, werden die jeweiligen Materialeigenschaften gesondert beeinflusst. So lassen sich durch entsprechende Temperaturbedingungen, die grundsätzlich im Herstellungsprozess z.B. durch die Bauraumtemperatur oder bei der Aufbereitung in einer aus der Spritzgießtechnik bekannten Plastifiziereinheit eines Spritzaggregats oder auch durch die Tropfengrößen der Materialien zueinander und/oder den Abstand der Tropfen zueinander innerhalb des jeweiligen Materials am Gegenstand selbst bei dessen Herstellung beeinflussbar sind, optimale Adhäsionseigenschaften oder Verarbeitungseigenschaften unter Berücksichtigung der jeweiligen Eigenheiten des Materials erhalten. Dies ist bei anderen Verfahren im Stand der Technik, die nicht tropfenweise mit entsprechenden Materialien arbeiten schon deshalb nicht möglich, weil z.B. beim Lasersintern nur mit einem Material gearbeitet wird oder weil wie beim Fadenaustragsverfahren nur Materialfäden und keine einzelnen Tropfen verfügbar sind. Zudem wird das Material nicht für den spezifischen Verwendungszweck individuell aufbereitet. Erfindungsgemäß erfolgt dies nämlich durch die Verwendung einer aus der Spritzgießtechnik bekannten Plastifiziereinheit eines Spritzaggregats. In der Spritzgießtechnik wird eine derartige Plastifiziereinheit eines Spritzaggregats dazu eingesetzt, das Ausgangsmaterial aufzubereiten, zu mischen und zu homogenisieren, um damit auch Einfluss auf die Verarbeitungsfähigkeit des Materials unter bestimmten Randbedingungen, wie z.B. Druck und Temperatur zu nehmen. Mit anderen Worten wird also das meist rieselfähige Ausgangsmaterial in den Aggregatzustand der Schmelze aufbereitet. Genau dies erfolgt auch erfindungsgemäß, so dass standardmäßig vorhandene Materialien verwendet werden können. Vorzugsweise wird die Temperatur der Materialien an ihrem Verarbeitungsort am Gegenstand (10, 20, 30, 50) durch die Tropfengröße des einen Materials relativ zur Tropfengröße des anderen Materials und/oder durch den Abstand der Tropfen der verschiedenen Materialien zueinander beeinflusst. Durch diesen Einfluss lässt sich die Bindungswirkung der Materialien gezielt beeinflussen.

Das erkennbare Grenzflächen-Gefüge der Materialien kann vorzugsweise durch eine vorgegebene Austragsfolge beeinflusst werden, wobei sich regelmäßig ein Bild ergibt, in dem die Materialien scheinbar grenzenlos ineinander übergehen, was durch die gezielte Platzierung der Materialien Tropfen für Tropfen möglich ist. Vorzugsweise wird das Material mittels eines feststehenden Austragskopfes je zu verarbeitenden Material ausgetragen, während der herzustellende Gegenstand relativ dazu auf einer vorzugsweise wenigstens fünf Achsen aufweisenden Geometrie gehalten ist. Eine Bewegung um weniger als fünf Achsen ist je nach Gegenstand jedoch ebenso möglich, wenn der Gegenstand z.B. hinsichtlich des Austragens der Tropfen weniger Störkanten aufweist. Damit kann der Gegenstand so unter dem Austragskopf bewegt werden, dass auch an dieser Stelle nochmals auf das Aneinanderfügen der Tropfen Einfluss genommen werden kann. Z.B. lässt sich ein nachfolgender Tropfen auf dem bereits verfestigten Tropfen so aufbringen, dass eine formgerechte Ausbildung auch angesichts der den beiden Materialien innewohnenden Materialeigenschaften optimiert werden kann. Deshalb können auch Materialien nebeneinander platziert werden, die eigentlich nicht miteinander kompatibel sind, also z.B. keine Van-der-Waals-Kräfte aufweisen, oder Materialien, die z.B. nicht vermischbar sind. Da ein Vermischen am Aufbringungsort in situ nicht stattfindet, sondern das Material Tropfen für Tropfen aneinander gefügt wird, kann zumindest auf mikroskopischer Ebene dennoch eine formschlüssige Verbindung auch in derartigen Fällen erreicht werden.

Vorteilhafterweise umfasst der herzustellende Gegenstand einen bedarfsweise vom Gegenstand später lösbaren Werkstückadapter, der auf dem für die Herstellung verwendeten Objektträger geometrisch festlegbar ist. Dieser Werkstückadapter kann mit dem Gegenstand weitere Verarbeitungsprozesse durchlaufen. Er wird damit zumindest vorübergehend zu einem Teil des Gegenstandes. Damit kann eine weitere Verarbeitung z.B. eine mechanische Nachbearbeitung oder ein weiterer Fertigungsschritt z.B. ein Auftragen weiterer Materialschichten wie Lacke oder dergleichen erfolgen, wobei ein lagegerechtes Montieren oder ein Vorgang, wie eine Vermessung des Werkstückes zur Qualitätssicherung möglich sind.

Weitere Vorteile ergeben sich aus den Unteransprüchen und der nachfolgenden Beschreibung bevorzugter Ausführungsbeispiele.

Im Folgenden wir die Erfindung anhand der beiden beigefügten Figuren näher erläutert. Es zeigen:
- Fig. 1: einen Gegenstand in Form einer Klammer mit einem Materialwechselbereich,
- Fig. 2a bis 2f: die Herstellung eines Gegenstandes aus zwei Materialien, die formschlüssig ineinandergreifen,
- Fig. 3a bis 3h: die Schritte bei der Herstellung eines Gegenstandes aus mehreren Materialien, der stellenweise mit einem Dichtungsmaterial ausgestattet ist,
- Fig. 4: eine Vorrichtung zur Herstellung eines Gegenstandes auf einem auf einer Fünfachsgeometrie angeordneten Objektträger mit angedeuteter Austragseinheit.

### Beschreibung bevorzugter Ausführungsbeispiele

Die Figuren zeigen verschiedene dreidimensionale Gegenstände 10, 20, 30, 50 die aus mehreren Materialien A, B hergestellt sind. Diese Materialien werden in einer zeichnerisch nicht dargestellten Plastifiziereinheit aufbereitet und liegen im Ausgangszustand in einer flüssigen Phase vor oder werden zur Verarbeitung verflüssigt. Das Plastifizieren des Materials erfolgt in einer aus der Spritzgießtechnik bekannten Plastifiziereinheit eines Spritzgießaggregats, die sich von den sonst bei der 3D-Fertigung üblichen Vorrichtungen, wie z.B. den beim 3D-Druck üblichen Druckköpfen, dadurch unterscheidet, dass keine vorgefertigten Materialien zugeführt werden. In der Spritzgießtechnik bedeutet ein Plastifizieren mittels einer Plastifiziereinheit eines Spritzaggregats nämlich ein Aufbereiten, Mischen und Homogenisieren des Ausgangsmaterials. Mit anderen Worten wird also das meist rieselfähige Ausgangsmaterial in den Aggregatzustand der Schmelze aufbereitet. Genau dies erfolgt auch erfindungsgemäß, so dass standardmäßig vorhandene Materialien verwendet werden können.

Tropfen 70 des Materials werden aus den Austragsköpfen 15, 25 dem Gegenstand 10, 20, 30, 50 gesondert zugeführt, so dass am Gegenstand Tropfen 70 aus dem einen Material neben Tropfen aus einem anderen Material so in einem Gefüge angeordnet sind, dass sie sich mechanisch überlappen. Der so aus den in situ verfestigten Tropfen 70 hergestellte Gegenstand weist wenigstens einen Materialwechselbereich 90 auf, in dem ein Wechsel von einem Material A auf das andere Material B stattfindet. In diesem Materialwechselbereich 90 gehen die Materialien vorzugsweise grenzenlos ineinander über, wobei jedoch auch Grenzbereiche gebildet werden können. Die Tropfen 70 der Materialien A, B variieren im Materialwechselbereich hinsichtlich des Abstands der Tropfen zueinander innerhalb des jeweiligen Materials und/oder Tropfengrößen der Materialien zueinander und bilden in situ das zumindest unter dem Mikroskop erkennbare Grenzflächen-Gefüge der Tropfen, das heißt, den Bereich, in dem die Materialien aneinandergrenzen oder ineinander übergehen.. Die Materialien sind zudem in eine flüssige Phase zur Bildung der Tropfen 70 unter Beeinflussung der jeweiligen Materialeigenschaften aufbereitet, um daraus ein am Gegenstand in situ erkennbares Grenzflächen-Gefüge zu bilden.

Tropfengrößen der Materialien zueinander und/oder der Abstand der Tropfen zueinander innerhalb des jeweiligen Materials bilden am fertigen Produkt einen erkennbaren Materialübergang. Durch die Beeinflussung der Tropfen 70 hinsichtlich ihrer Materialeigenschaften können insbesondere schichtweise Überlappungen bzw. Verbindungen im Materialwechselbereich 90 erzeugt werden und zusätzlich zur Adhäsion der unterschiedlichen Werkstoffe lassen sich gerade durch die Beeinflussung der Materialien gegebenenfalls in Verbindung mit einer mechanischen Überlappung Festigkeiten erreichen, welche jeweils an die Grundwerte der einzelnen Materialien heranreichen. Tropfengröße und Tropfendichte, verursacht durch die Positionierung der Tropfen, beeinflussen lokal die Temperatur der aneinander zu fügenden Materialien, so dass gezielt auf temperaturabhängige Materialeigenschaften eingewirkt werden kann, die die Materialbindung bzw. das Aneinanderfügen der Materialien beeinflussen. Zu denken ist insbesondere an die Adhäsion, die Temperaturdifferenz zwischen den Materialien, den temperaturabhängigen Aggregatszustand, die Homogenisierung, das Schwindungsverhalten oder den Kraftschluss.

Die Materialien werden unmittelbar aus einem unter Druck stehenden bzw. setzbaren Materialspeicher vorzugsweise tropfenweise mit einer Tropfengröße von 0,001 bis 0,1 mm³, vorzugsweise bis 0,05 mm³ ausgetragen. Der Druck liegt dabei vorzugsweise in einer Höhe, wie er aus der Spritzgießtechnik von Kunststoffen bekannt ist, d.h. bei mindestens 10 MPa bis 100 MPa. Die verwendeten Materialien besitzen regelmäßig eine dynamische Viskositätszahl des verfestigbaren Materials zwischen 100 und 100000 [Pa s], wobei vorzugsweise das verfestigbare Material ein in der Spritzgießtechnik üblicher Kunststoff oder ein Harz ist. Dies macht die Verarbeitung aus dem unter Druck setzbaren Materialspeicher erforderlich, da Drücke von mehr als 10 bis 100 MPa (100 bis 1000 bar) ohne weiteres erforderlich sind, insbesondere wenn zur Erzielung kleiner Tropfenvolumen kleine Austragsöffnungen eingesetzt werden.

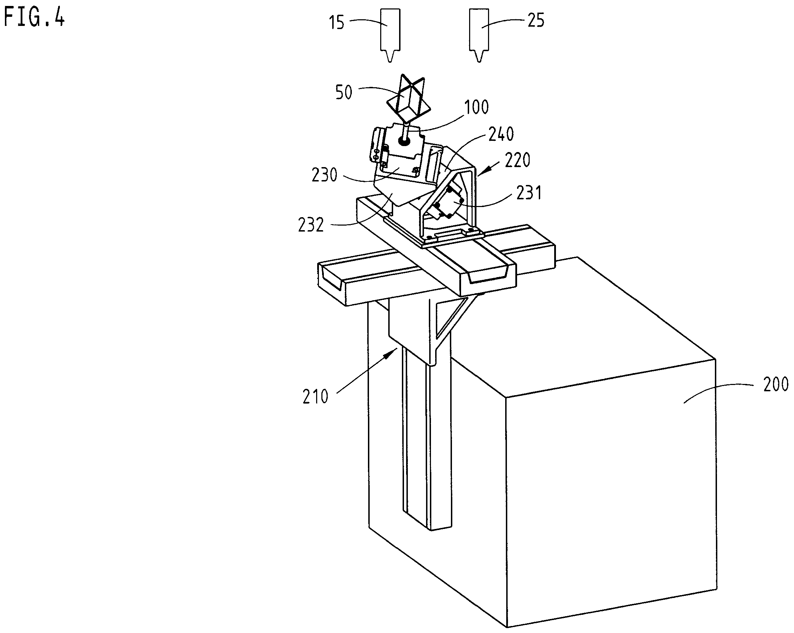

Das Ausbringen erfolgt durch das sequenzielle, je Material gesonderte Austragen Tropfen für Tropfen mittels eines feststehenden Austragskopfes 15, 25, wie insbesondere in Fig. 4 angedeutet. Während der Austragskopf stationär oder zumindest im Wesentlichen feststehend ist, so dass die Tropfen vorzugsweise in Richtung der Schwerkraft ausgetragen werden, bewegt sich der herzustellende Gegenstand 10, 20, 30, 50 bei seiner Herstellung relativ zum Austragskopf 15, 25 auf einem um wenigstens fünf Achsen bewegbaren Objektträger 100. Bedarfsweise können mehr oder weniger Achsen vorgesehen sein. Dadurch kann der Gegenstand "unter" dem Austragskopf 15, 25 so bewegt werden, dass ohne Einfluss eventueller Störkanten Tropfen für Tropfen platziert werden kann. Weniger Achsen reichen aus, wenn der Gegenstand so geformt ist, dass sich Störkanten beim Austragen der Tropfen 70 vermeiden lassen. Die Tropfen 70 können sich in situ verfestigen und die von den 3-D Daten ermittelte Geometrie des Gegenstandes wird erstellt.

Durch Beeinflussung von Materialeigenschaften und/oder Prozessparametern ist es möglich, Wandungen des Gegenstandes in jedem Bauzustand selbsttragend auszubilden. Die Materialeigenschaften können aber auch insgesamt beeinflusst werden, worauf weiter unten noch eingegangen wird. Dies führt dazu, dass im Gegensatz zu vorbekannten Verfahren im Stand der Technik beliebige, auch komplexe Formen erstellt werden können, ohne das zusätzliche Hilfsmittel wie Stützstrukturen oder Stützkörper erforderlich sind. Gleichzeitig können beliebige Materialien miteinander oder besser nebeneinander bzw. ineinander verarbeitet werden, ohne sie zu vermischen.

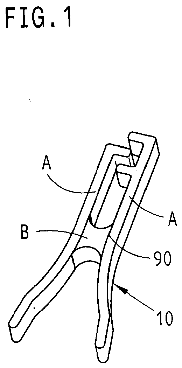

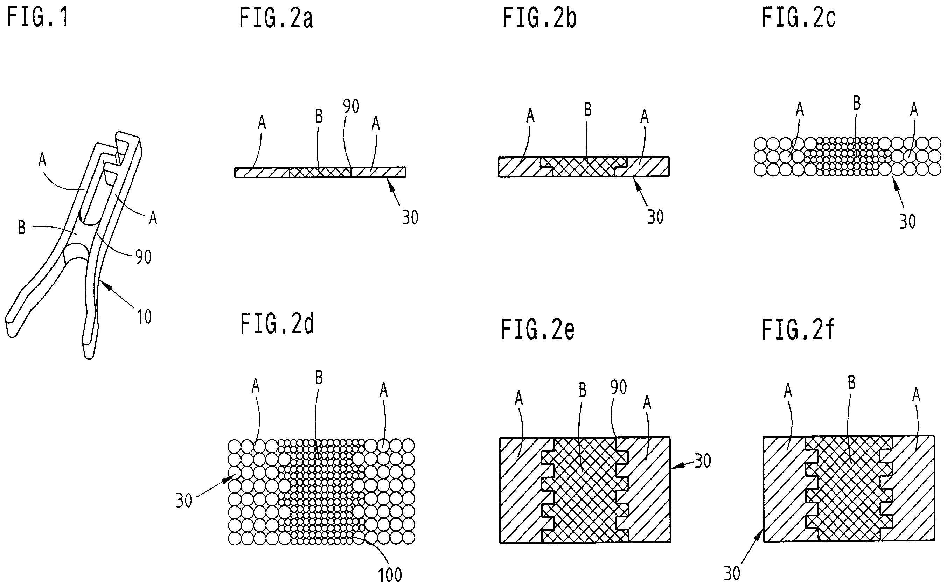

Das Grenzflächen-Gefüge entsteht durch eine Aneinanderreihung der Tropfen 70 der Materialien A, B, wobei die Materialien auch in einer vorgegebenen Austragsfolge ausgebracht werden können, um dadurch z.B. die Adhäsionseigenschaften oder den Formschluss zwischen den Materialien zu beeinflussen. Dadurch ist es möglich, dass z.B. bei dem in Fig. 1 dargestellten Gegenstand 10, einer Klammer, der elastomere Bereich des Materials B in die Bereiche des anderen Materials A über einen Materialwechselbereich 90 übergeht. Dieser Übergang kann allmählich ausgebildet werden, d.h. je nach Anzahl der Tropfen des einen Materials neben der Anzahl der Tropfen des anderen Materials kann ein Übergang von dem Material A zu dem Material B und umgekehrt vom Material B zum Material A erfolgen, und zwar tropfenweise, zeilenweise oder schichtweise.

Der Gegenstand 10, 20, 30, 50 wird durch gesonderte Beeinflussung der aneinanderzufügenden Materialien A, B erhalten, in dem die Materialeigenschaften beim Aufbereiten, beim Austragen und/oder beim Platzieren am Gegenstand 10, 20, 30 oder die Prozessparameter beim Herstellungsprozess beeinflusst werden. Diese umfassen wenigstens eine der folgenden Eigenschaften wenigstens eines Materials (A, B) der aneinander zu fügenden Materialien (A, B) und/oder wenigstens einer der folgenden Prozessparameter des Verfahrens:
- Tropfengrößen der Materialien zueinander und/oder Abstand der Tropfen zueinander innerhalb des jeweiligen Materials,
- Adhäsion in Abhängigkeit der Temperatur,
- Grundtemperatur des Materials (A, B),
- Austragstemperatur des Materials (A, B),
- Temperaturdifferenz zwischen den Materialien (A, B),
- Mischung der Materialien (A, B),
- Aggregatszustand der Materialien (A, B) in Abhängigkeit der Temperatur,
- Homogenisierung der Materialien (A, B),
- Schwindungsverhalten der Materialien (A, B),
- Raumstruktur der Materialien (A, B),
- Kraftschluss der Materialien (A, B) in Abhängigkeit der Temperatur,
- Packungsdichte der Materialien (A, B),
- Farbe der Materialien (A, B).

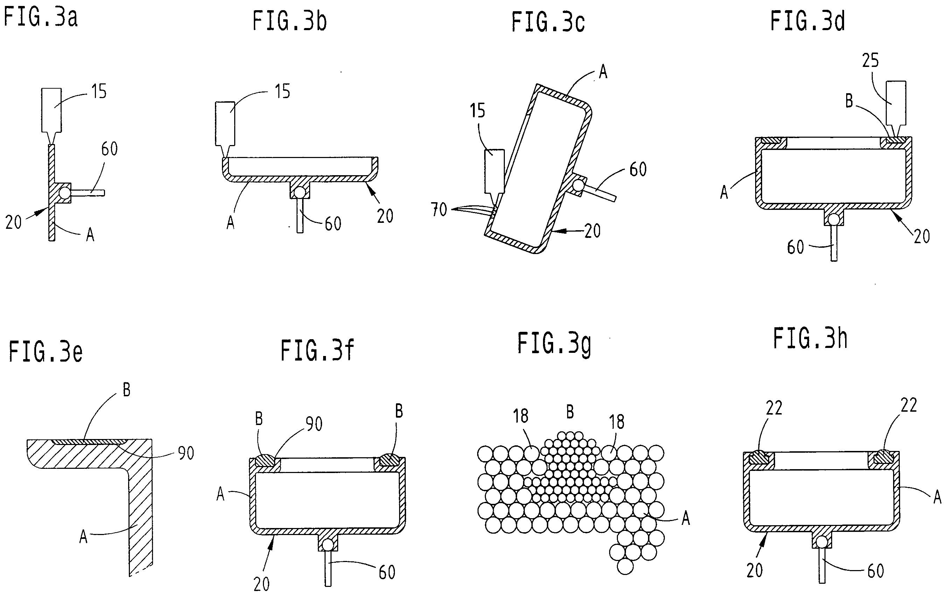

All diese Eigenschaften können je für sich oder gemeinsam beeinflusst werden. So kann z.B. das eine Material hinsichtlich der Austragstemperatur so beeinflusst werden, dass eine optimale Adhäsion eintritt, während das andere Material hinsichtlich der Grundtemperatur unter Berücksichtigung der zuvor eingetretenen Abkühlung am Gegenstand so ausgebracht wird, dass sich ein optimales Aneinanderfügen der beiden Materialien am Gegenstand ergibt. Allerdings ist zu berücksichtigen, dass gerade Änderungen der Temperatur in der Regel nur allmählich geschehen können. Beeinflussbar ist aber die Temperatur der Materialien A, B an ihrem Verarbeitungsort am Gegenstand 10, 20, 30, 50 durch die Tropfengrößen der Materialien zueinander, denn je größer der Tropfen, desto mehr Wärmeenergie ist ihm immanent, oder durch den Abstand der Tropfen zueinander innerhalb des jeweiligen Materials, denn je größer der Abstand der Tropfen, desto weniger wirken sich die Materialtemperaturen aus. Die zeigen insbesondere die Figuren 2c, 2d und 3g.

Auf diese Art und Weise kann z.B. gemäß den Figuren 2a bis 2f ein Gegenstand hergestellt werden, bei dem die Materialien A, B formschlüssig miteinander verbunden sind, wobei die formschlüssige Verbindung im Großen vorhanden sein kann oder zumindest auf mikroskopischer Ebene möglich ist. Ebenso können die Materialien auch quasi kraftschlüssig verbunden oder verklebt sein. In Fig. 2a wird dazu eine erste Schicht des Gegenstandes 30 aus den Materialien A, B erstellt. Schicht für Schicht wird so in den Figuren 2b und 2c der Gegenstand 30 aufgebaut, wobei deutlich das versetzte, formschlüssige Ineinandergreifen der Materialien A, B zu erkennen ist. Bei einer entsprechenden Fortsetzung ergibt sich dann eine Ausgestaltung gemäß den Figuren 2d bis 2f.

Die Figuren 2c und 2d zeigen die Variation der Tropfengröße. Material A wird mit größeren Tropfen ausgebracht als Material B. Dadurch kann Einfluss auf den Abkühlprozess und damit z.B. auf eine optimale Bindungstemperatur genommen werden. Die größeren Tropfen des Materials A kühlen langsamer ab und verfestigen sich damit auch langsamer, da ihnen mehr Wärmeenergie immanent ist, als die kleineren Tropfen des Materials B. Zudem befinden sich die Tropfen bei beiden Materialien in einem großen Abstand (im Vergleich zu Fig. 3g), da die Tropfen nicht auf Lücke gesetzt sind. Je größer der Abstand der Tropfen aber ist, desto weniger wirken sich die Materialtemperaturen aus. Werden die damit nebeneinander erfolgenden Abkühlprozesse der Materialien aufeinander abgestimmt, kann ein optimaler Temperaturbereich am Verarbeitungsort erzielt werden, in dem die Bindungswirkung der Materialien optimal wird.

Die Figuren 3a bis 3h verdeutlichen die Herstellung eines weiteren Gegenstandes 20, der gemäß Fig. 3h an seiner Oberseite ein Dichtungsmaterial 22 aufweist. Dazu wird auf einem Werkstückadapter 60 zunächst das Material A aus dem Austragskopf 15 Tropfen für Tropfen ausgebracht. Erkennbar ist dabei, dass der Austragskopf im Wesentlichen vertikal stehend angeordnet ist, so dass die Tropfen in Schwerkraftrichtung auf dem Gegenstand 20 aufgebracht werden. Auf diese Weise werden auch die Seitenwandungen erzeugt, wobei der Gegenstand 20 unter dem Austragskopf entsprechend bewegt wird. Um nun den Unterbau für die Dichtungen zu erzeugen, folgt ein weiteres Drehen des Gegenstandes 20 in eine Stellung gemäß Fig. 3c. Sobald die entsprechenden Stellen vorbereitet sind, kann dann gemäß Fig. 3d das das Dichtungsmaterial 22 umgebende Material A als auch das Dichtungsmaterial (Material B) bedarfsweise auch schichtweise ausgebracht werden. Fig. 3e zeigt insofern den Materialwechselbereich 90, der entweder grenzenlos gebildet sein kann, wie bereits oben beschrieben, oder auch mit einer entsprechenden Grenzfläche. Das Material wird dann gemäß Fig. 3f eingebracht, wobei z.B. zunächst das Dichtungsmaterial 22 aus dem Austragskopf 25 ausgebracht wird, das dann gemäß Fig. 3g in das härtere Grundmaterial aus dem Material A eingebettet wird, in dem z.B. Vorsprünge 18 aus dem Material A ausgebildet werden. Das Ergebnis ist dann der Gegenstand 20 gemäß Fig. 3h. Der Übergang zwischen den harten und weichen Materialen wird durch die Tropfengrößen der Materialien zueinander und/oder den Abstand der Tropfen zueinander innerhalb des jeweiligen Materials hinsichtlich der Materialverbindung beeinflusst.

Fig. 3g zeigt dabei im Gegensatz zu Fig. 2c, 2d, dass die Tropfen der Materialien zwar unterschiedlich groß sind, aber auf Lücke gesetzt sind, d.h. enger gesetzt sind als in Fig. 2c, 2d. Werden die Tropfen enger gesetzt, bleibt die Temperatur der Materialien länger erhalten. Durch die Tropfengröße wird jedoch Einfluss auf die Abkühlgeschwindigkeit der Materialien genommen, da je kleiner der Tropfen, desto schneller die Abkühlung. Beides, Tropfengröße und -position, kann zur Erzielung einer für die Bindung der Materialien A, B optimalen Temperatur gezielt beeinflusst werden.

Die Gegenstände werden vorzugsweise gemäß Fig. 4 auf einer 5-Achs-Geometrie zur Herstellung des Gegenstandes 50 erhalten, wobei auch mehr oder weniger Achsen vorgesehen sein können. Auf dem Objektträger 100 befindet sich z.B. ein Werkstückadapter 60, der den Gegenstand 50 trägt. Der Objektträger ist seinerseits auf einem Winkeltisch 232 gelagert, der wiederum auf einem Koordinatentisch 210 abgestützt ist. Der Koordinatentisch 210 erlaubt eine Bewegung des den Objektträger 100 tragenden Drehtischs in drei Koordinatenrichtungen. Die Antriebe für die Bewegung der Schlitten des Koordinatentisches entlang den drei Koordinatenrichtungen sind Linearschlitten. Am Drehtisch 220 ist an einer vorzugsweise 45°-Schräge 240 ein Winkeltisch 232 ebenfalls mit einer vorzugsweise 45°-Schräge über einen Drehmotor 231 drehbar gelagert. Am Winkeltisch 232 ist dann der Objektträger 100 über den Drehmotor 230 drehbar gelagert. Durch Überlagerung der durch die Drehmotoren 230, 231 möglichen Bewegungen werden verschiedenste Positionen des Objektträgers 100 ansteuerbar, um den Gegenstand selbsttragend herzustellen.

Der Werkstückadapter 60 gemäß Fig. 3a bietet eine geometrische Definition eines Ausgangspunktes, der sich auf der einen Seite an einer festen Aufnahme im Objektträger orientiert. Auf der anderen Seite bietet er die Basis für die Herstellung des Gegenstandes und wird auch zunächst ein Teil des Gegenstands, sodass der Gegenstand lagegenau bzw. lageorientiert weiterverarbeitet werden kann. Diese weitere Verarbeitung kann zum Beispiel eine mechanische Nachbearbeitung sein oder ein weiterer Fertigungsschritt mit dem Auftragen weiterer Materialschichten wie zum Beispiel Lackbeschichtungen in einer anderen Maschine mit einem anderen Material.

Auch das lagegerechte Montieren oder ein Vorgang wie die Vermessung des Werkstücks zur Qualitätssicherung sind mögliche weitere Verarbeitungsschritte.

Gerade bei Hart-Weich-Verbindungen wie bei einem Gegenstand 10 gemäß Fig. 1 oder gemäß Fig. 3h wird deutlich, dass die Grundwerkstoffe (Thermoplast, Elastomer) individuell aufbereitet grundsätzlich leicht zu verflüssigen ist. Das Problem beruht eher darauf, wie diese Materialien nebeneinander verarbeitet werden können, wenn beide flüssig vorliegen. Durch die Beeinflussung der Materialeigenschaften und von Tropfengrößen der Materialien zueinander und des Abstands der Tropfen zueinander innerhalb des jeweiligen Materials werden Verbindungen im Materialwechselbereich 90 erzeugt mit Festigkeiten, welche jeweils an die Grundwerte der einzelnen Materialien heranreichen. So kann eine Hart-Weich-Verbindung durch die Materialaufbereitung und den tröpfchenweisen Auftrag erreicht werden, was bei anderen Verfahren nicht möglich ist. Auf diese Weise lassen sich z.B. neue Funktionsteile wie Gelenke, Scharniere, Dynamiksysteme wie Schleudern und Dämpfer als Komplettbauteile in einem Arbeitsgang realisieren.

Grundsätzlich kann der Gegenstand aus beliebigen Materialien hergestellt werden, wobei vorzugsweise in der Spritzgießtechnik übliche und damit günstig zu beschaffende Materialien und Zusätze verwendet werden, da diese als Massengut erhältlich sind. Grundsätzlich können aber auch andere Materialien wie z.B. Medikamente oder Materialien aus der Süßwarenindustrie verarbeitet werden, wobei es von Vorteil ist, wenn die Materialien sich bei der Temperatur des Bauraums verfestigen.

### Bezugszeichenliste

- 10, 20, 30, 50: Gegenstand
- 15, 25: Austragskopf
- 18: Vorsprung
- 22: Dichtungsmaterial
- 60: Werkstückadapter
- 70: Tropfen
- 90: Materialwechselbereich
- 100: Objektträger
- 200: Gestell
- 210: Koordinatentisch
- 220: Drehtisch horizontal/vertikal
- 230: Drehmotor Objektträger
- 231: Drehmotor Winkeltisch
- 232: Winkeltisch
- 240: 45°-Schräge
- A, B: Material

## Patentansprüche

1. Verfahren zur Herstellung eines dreidimensionalen Gegenstands (10, 20, 30, 50) aus in situ verfestigten Tropfen (70) aus mehreren Materialien (A, B), die im Ausgangszustand in einer flüssigen Phase vorliegen oder zur Verarbeitung verflüssigt sind und mittels einer aus der Spritzgießtechnik bekannten Plastifiziereinheit eines Spritzaggregats aufbereitet, gemischt und homogenisiert werden, wobei der Gegenstand wenigstens einen Materialwechselbereich (90) aufweist, in dem von einem Material (A) der mehreren Materialien auf ein anderes Material (B) der mehreren Materialien gewechselt wird, wobei die Materialien gesondert zugeführt werden und im Materialwechselbereich (90) Tropfen (70) des einen Materials neben Tropfen des anderen Materials so in einem Grenzflächen-Gefüge platziert werden, dass sie sich mechanisch überlappen, und sich dort selbsttätig verfestigen, **dadurch gekennzeichnet, dass** die Tropfen (70) der Materialien (A, B) im Materialwechselbereich (90) hinsichtlich des Abstands der Tropfen zueinander innerhalb des jeweiligen Materials (A, B) und/oder hinsichtlich der Tropfengrößen der Materialien (A, B) zueinander variiert werden und das Grenzflächen-Gefüge der Tropfen in situ bilden,
wobei Eigenschaften der aneinander zu fügenden Materialien (A, B) und/oder Prozessparameter des Verfahrens beim Aufbereiten und beim Austragen und/oder beim Platzieren am Gegenstand (10, 20, 30, 50) zur Beeinflussung von nebeneinander erfolgenden Abkühlprozessen der Materialien aufeinander abgestimmt werden, wobei die Materialien (A, B) formschlüssig miteinander verbunden oder kraftschlüssig aneinandergefügt werden.

2. Verfahren nach Anspruch 1, **dadurch gekennzeichnet, dass** die Temperatur der Materialien (A, B) an ihrem Verarbeitungsort am Gegenstand (10, 20, 30, 50) durch die Tropfengröße des einen Materials (A) relativ zur Tropfengröße des anderen Materials (B) und/oder durch den Abstand der Tropfen der verschiedenen Materialien (A,B) zueinander beeinflusst wird.

3. Verfahren nach einem der Ansprüche 1 oder 2, **dadurch gekennzeichnet, dass** die Tropfen (70) mittels eines feststehenden Austragskopfes (15, 25) je zu verarbeitenden Material sequenziell ausgetragen werden, während der Gegenstand (10, 20, 30) bei seiner Herstellung relativ zum Austragskopf (15, 25) auf einem um wenigstens fünf Achsen bewegbaren Objektträger (100) bewegt wird.

4. Verfahren nach einem der vorhergehenden Ansprüche, **dadurch gekennzeichnet, dass** wenigstens eine der folgenden Eigenschaften wenigstens eines Materials (A, B) der aneinander zu fügenden Materialien (A, B) und/oder wenigstens einer der folgenden Prozessparameter des Verfahrens beeinflussbar ist:
- Größe und/oder Position der Tropfen (70)
- Adhäsion in Abhängigkeit der Temperatur,
- Grundtemperatur des Materials (A, B),
- Austragstemperatur des Materials (A, B),
- Temperaturdifferenz zwischen den Materialien (A, B),
- Mischung der Materialien (A, B),
- Aggregatszustand der Materialien (A, B) in Abhängigkeit der Temperatur,
- Homogenisierung der Materialien (A, B),
- Schwindungsverhalten der Materialien (A, B),
- Raumstruktur der Materialien (A, B),
- Kraftschluss der Materialien (A, B) in Abhängigkeit der Temperatur,
- Packungsdichte der Materialien (A, B),
- Farbe der Materialien (A, B).

5. Verfahren nach einem der vorhergehenden Ansprüche, **dadurch gekennzeichnet, dass** das Material (A, B) ein in der Spritzgießtechnik übliches Massengut oder ein in der Spritzgießtechnik üblicher Zusatz ist.

6. Dreidimensionaler Gegenstand (10, 20, 30, 50) aus in situ verfestigten Tropfen (70) aus mehreren gesondert zugeführten Materialien (A,B), die im Ausgangszustand in einer flüssigen Phase vorliegen oder zur Verarbeitung verflüssigt sind und mittels einer aus der Spritzgießtechnik bekannten Plastifiziereinheit eines Spritzaggregats aufbereitet, gemischt und homogenisiert sind, wobei der Gegenstand wenigstens einen Materialwechselbereich (90) aufweist, in dem ein Wechsel von einem Material (A) der mehreren Materialien auf ein anderes Material (B) der mehreren Materialien vorgesehen ist, wobei im Materialwechselbereich (90) Tropfen (70) des einen Materials neben Tropfen des anderen Materials so in einem Grenzflächen-Gefüge platziert sind, dass sie sich mechanisch überlappen, **dadurch gekennzeichnet, dass** im Materialwechselbereich (90) die Tropfen (70) des einen Materials (A, B) relativ zu den Tropfen des anderen Materials hinsichtlich des Abstands der Tropfen zueinander innerhalb des jeweiligen Materials (A, B) und/oder hinsichtlich der Tropfengröße der Materialien (A, B) zueinander unterschiedlich und zur Beeinflussung von nebeneinander erfolgenden Abkühlprozessen der Materialien aufeinander abgestimmt sind und das Grenzflächen-Gefüge der Tropfen in situ bilden, wobei die Materialien (A, B) formschlüssig miteinander verbunden oder kraftschlüssig aneinandergefügt sind.

7. Gegenstand nach Anspruch 6, **dadurch gekennzeichnet, dass** das erkennbare Grenzflächen-Gefüge durch eine Aneinanderreihung der Tropfen (70) in einer vorgegebenen Austragsfolge der Materialien (A, B) gebildet ist.

8. Gegenstand nach Anspruch 6 oder 7, **dadurch gekennzeichnet, dass** eines der Materialien (B) ein Elastomer ist, das an die anderen Teile des Gegenstandes (10) angefügt ist.

9. Gegenstand nach einem der Ansprüche 6 bis 8, **dadurch gekennzeichnet, dass** er Vorsprünge (18) aus dem einen Material (A) aufweist, die das andere Material (B) überdecken.

10. Gegenstand nach einem der Ansprüche 6 bis 9, **dadurch gekennzeichnet, dass** das eine Material (B) ein Dichtungsmaterial (22) ist, was im anderen Material (A) angeordnet ist, welches Material (A) gegenüber dem Dichtungsmaterial (22) härter ist.

11. Gegenstand nach einem der Ansprüche 6 bis 10, **dadurch gekennzeichnet, dass** der Gegenstand (10, 20, 30) einen bedarfsweise lösbaren Werkstückadapter (60) umfasst, der zur Herstellung des Gegenstand an einem Objektträger (100) geometrisch festlegbar ist.

## Claims

1. Method for producing a three-dimensional object (10, 20, 30, 50) from drops (70) of a plurality of materials (A, B) which are hardened in situ, said materials being present in the starting condition in a liquid phase or being liquefied for processing and prepared, mixed and homogenised by means of a plasticising unit of an injection assembly, said plasticising unit being known from injection moulding technology, wherein the object has at least one material changeover region (90) in which a changeover takes place from one material (A) of the plurality of materials to another material (B) of the plurality of materials, wherein the materials are fed in separately and, in the material changeover region (90), drops (70) of one material are placed alongside drops of the other material in a boundary surface structure such that they overlap mechanically and automatically harden there, **characterised in that** the drops (70) of the materials (A, B) in the material changeover region (90) are varied relative to one another with regard to the spacing of the drops from one another within each material (A, B) and/or with regard to the drop sizes of the materials (A, B) relative to one another and form the boundary surface structure of the drops in situ,
wherein properties of the materials (A, B) to be joined to one another and/or process parameters of the method are adjusted to one another during preparation and on discharging and/or on placement on the object (10, 20, 30, 50) for influencing cooling processes of the materials taking place alongside one another, wherein the materials (A, B) are connected to one another in positive-locking manner or are joined to one another in force-locking manner.

2. Method according to claim 1, **characterised in that** the temperature of the materials (A, B) at their processing site on the object (10, 20, 30, 50) is influenced by means of the drop size of one material (A) relative to the drop size of the other material (B) and/or by means of the spacing of the drops of the different materials (A, B) from one another.

3. Method according to one of claims 1 or 2, **characterised in that** the drops (70) are discharged sequentially by means of a fixedly arranged discharging head (15, 25) for each material to be processed, while the object (10, 20, 30) is moved, during its production, relative to the discharging head (15, 25) on an object carrier (100) that is movable about at least five axes.

4. Method according to one of the preceding claims, **characterised in that** at least one of the following properties of at least one material (A, B) of the materials (A, B) to be joined to one another and/or at least one of the following process parameters of the method is able to be influenced:
- size and/or position of the drops (70),
- adhesion dependent upon temperature,
- base temperature of the material (A, B),
- discharging temperature of the material (A, B),
- temperature difference between the materials (A, B),
- mix of the materials (A, B),
- aggregate state of the materials (A, B) dependent upon the temperature,
- homogenising of the materials (A, B),
- shrinkage behaviour of the materials (A, B),
- spatial structure of the materials (A, B),
- force-locking of the materials (A, B) dependent upon the temperature,
- packing density of the materials (A, B),
- colour of the materials (A, B).

5. Method according to one of the preceding claims, **characterised in that** the material (A, B) is a bulk material that is common in injection moulding technology or is an additive that is common in injection moulding technology.

6. Three-dimensional object (10, 20, 30, 50) made from drops (70) of a plurality of materials (A, B) which are separately fed in and are hardened in situ, said materials being present in the starting condition in a liquid phase or being liquefied for processing and prepared, mixed and homogenised by means of a plasticising unit of an injection assembly, said plasticising unit being known from injection moulding technology, wherein the object has at least one material changeover region (90) in which a changeover from one material (A) of the plurality of materials to another material (B) of the plurality of materials is provided, wherein in the material changeover region (90), drops (70) of one material are placed alongside drops of the other material in a boundary surface structure such that they overlap mechanically,
**characterised in that** in the material changeover region (90), the drops (70) of one material (A, B) are different relative to the drops of the other material with regard to the spacing of the drops from one another within each material (A, B) and/or with regard to the drop size of the materials (A, B) relative to one another and, to influence cooling processes of the materials taking place alongside one another, are adjusted to one another, and form the boundary surface structure of the drops in situ, wherein the materials (A, B) are connected to one another in positive-locking manner or are joined to one another in force-locking manner.

7. Object according to claim 6, **characterized in that** the discernible boundary surface structure is formed by means of an apposition of the drops (70) in a predetermined discharging sequence of the materials (A, B).

8. Object according to claim 6 or 7, **characterised in that** one of the materials (B) is an elastomer which is attached to the other parts of the object (10).

9. Object according to one of claims 6 to 8, **characterised in that** it has projections (18) made from one material (A) which overlap the other material (B).

10. Object according to one of claims 6 to 9, **characterised in that** one material (B) is a seal material (22), which is arranged in the other material (A), said material (A) being harder than the seal material (22).

11. Object according to one of claims 6 to 10, **characterised in that** the object (10, 20, 30) comprises a, if needed, releasable workpiece adapter (60) which is geometrically fixable on an object carrier (100) for the production of the object.

## Revendications

1. Un procédé de fabrication d'un objet tridimensionnel (10, 20, 30, 50) à partir de gouttes solidifiées sur place (70) de plusieurs matériaux (A, B) qui à l'état initial sont sous forme liquide ou sont liquéfiés pour être utilisés et qui peuvent être préparés, mélangés et homogénéisés au moyen d'une unité de plastification d'une installation d'injection connue dans la technique du moulage par injection, l'objet présentant au moins une zone de changement de matériau (90) où se produit un changement d'un matériau (A) parmi les plusieurs matériaux à un autre matériau (B) parmi les plusieurs matériaux, les matériaux étant amenés séparément et dans la zone de changement de matériau (90), des gouttes (70) de l'un des matériaux étant placées dans une structure interfaciale à côté de gouttes de l'autre matériau, de telle sorte qu'elle se superposent mécaniquement et se solidifient toutes seules, **caractérisé en ce que** les gouttes (70) des matériaux (A, B) sont variées les unes par rapport aux autres dans la zone de changement de matériau (90), pour ce qui est de l'espacement des gouttes les unes par rapport aux autres à l'intérieur des matériaux respectifs (A, B) et/ou pour ce qui est des dimensions des gouttes des matériaux (A, B), et forment sur place la structure interfaciale des gouttes,
des propriétés des matériaux (A, B) à assembler l'un à l'autre et/ou des paramètres du procédé étant coordonné(s) entre elles/eux lors de la préparation et de l'application et/ou lors du placement sur l'objet (10, 20, 30, 50) pour influencer les processus de refroidissement des matériaux ayant lieu les uns à côté des autres, les matériaux (A,B) étant liés l'un à l'autre par complémentarité de forme ou assemblés l'un à l'autre par adhérence.

2. Procédé selon la revendication 1, **caractérisé en ce que** la température des matériaux (A, B) est influencée sur leur lieu de traitement au niveau de l'objet (10, 20, 30, 50) par la taille des gouttes de l'un (A) des matériaux relativement à la taille des gouttes de l'autre (B) matériau et/ou par la distance entre les gouttes des différents matériaux (A, B).

3. Procédé selon l'une des revendications 1 et 2, **caractérisé en ce que** les gouttes (70) sont appliquées séquentiellement au moyen d'une tête d'application (15, 25) fixe pour chaque matériau à traiter, tandis que l'objet (10, 20, 30) est déplacé lors de sa fabrication par rapport à la tête d'application (15, 25) sur un porte-objet (100) mobile suivant au moins cinq axes.

4. Procédé selon l'une des revendications précédentes, **caractérisé en ce qu'**au moins une des propriétés suivantes d'au moins un matériau (A, B) parmi les matériaux (A,B) à assembler l'un à l'autre et/ou au moins l'un des paramètres du procédé suivants est/sont influençable(s) :
- la taille et/ou la position des gouttes (70),
- l'adhésion en fonction de la température,
- la température de base du matériau (A, B),
- la température d'application du matériau (A, B),
- la différence de température entre les matériaux (A, B),
- le mélange des matériaux (A, B),
- l'état d'agrégation des matériaux (A, B) en fonction de la température,
- l'homogénéisation des matériaux (A, B),
- le comportement de retrait des matériaux (A, B),
- la structure spatiale des matériaux (A, B),
- l'adhérence des matériaux (A, B) en fonction de la température,
- la densité d'agglomération des matériaux (A, B),
- la couleur des matériaux (A, B).

5. Procédé selon l'une des revendications précédentes, **caractérisé en ce que** le matériau (A, B) est une matière habituelle de la technique du moulage par injection ou est un additif habituel de la technique du moulage par injection.

6. Objet tridimensionnel (10, 20, 30, 50) constitué de gouttes solidifiées (70) sur place de plusieurs matériaux (A, B) amenés séparément qui sont à l'état initial sous forme liquide ou sont liquéfiés pour la fabrication et qui sont préparés, mélangés et homogénéisés au moyen d'une unité de plastification d'une installation d'injection connue dans la technique du moulage par injection, l'objet présentant au moins une zone de changement de matériau (90), dans laquelle est prévu un changement d'un matériau (A) parmi les différents matériaux en un autre matériau (B) parmi les différents matériaux, dans la zone de changement de matériau (90), des gouttes (70) de l'un des matériaux étant placées à côté de gouttes de l'autre matériau dans une structure interfaciale, de sorte qu'elles se superposent mécaniquement,
**caractérisé en ce que** dans la zone de changement de matériau (90), les gouttes (70) de l'un des matériaux (A, B) sont coordonnées avec les gouttes de l'autre matériau, pour ce qui est de la distance entre les gouttes à l'intérieur du matériau respectif (A, B) et/ou pour ce qui est des dimensions des gouttes des matériaux (A, B) les unes par rapport aux autres indifféremment, et pour influencer des processus de refroidissement des matériaux ayant lieu les uns à côté des autres, et forment sur place la structure interfaciale des gouttes, les matériaux (A, B) étant liés l'un à l'autre par complémentarité de forme ou assemblés l'un à l'autre par adhérence.

7. Objet selon la revendication 6, **caractérisé en ce que** la structure d'interfaciale reconnaissable est formée par une juxtaposition des gouttes (70) dans une suite d'applications prédéterminée des matériaux (A, B).

8. Objet selon la revendication 6 ou 7, **caractérisé en ce que** l'un des matériaux (B) est un élastomère qui est assemblé aux autres parties de l'objet (10).

9. Objet selon l'une des revendications 6 à 8, **caractérisé en ce qu'**il présente des protubérances (18) constituées de l'un (A) des matériaux, lesquelles recouvrent l'autre matériau (B).

10. Objet selon l'une des revendications 6 à 9, **caractérisé en ce que** l'un (B) des matériaux est un matériau d'étanchéité (22) qui est disposé dans l'autre matériau (A), lequel matériau (A) étant plus dur que le matériau d'étanchéité (22).

11. Objet selon l'une des revendications 6 à 10, **caractérisé en ce que** l'objet (10, 20, 30) comprend au besoin un adaptateur de pièce (60) amovible, qui peut être fixé géométriquement pour la fabrication de l'objet à un porte-objet (100).
